(19) **Europäisches Patentamt**
**European Patent Office**
**Office européen des brevets**

(11) **EP 2 240 818 B1**

(12) **EUROPEAN PATENT SPECIFICATION**

(45) Date of publication and mention
of the grant of the patent:
**17.10.2018 Bulletin 2018/42**

(51) Int Cl.:
***G02F 1/13357*** *(2006.01)*

(21) Application number: **08752188.6**

(86) International application number:
**PCT/JP2008/058162**

(22) Date of filing: **21.04.2008**

(87) International publication number:
**WO 2009/084249 (09.07.2009 Gazette 2009/28)**

(54) **REFLECTION/TRANSMISSION TYPE LIQUID CRYSTAL DISPLAY APPARATUS**

FLÜSSIGKRISTALLANZEIGEVORRICHTUNG DES REFLEXIONS-/DURCHLASSTYPS

APPAREIL D'AFFICHAGE À CRISTAUX LIQUIDES DE TYPE RÉFLEXION/TRANSMISSION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.12.2007  JP 2007338116**

(43) Date of publication of application:
**20.10.2010  Bulletin 2010/42**

(73) Proprietor: **Ortus Technology Co., Ltd.
Tokyo 191-0065 (JP)**

(72) Inventors:
• **ARAI, Norihiro
Tokyo 205-8555 (JP)**

• **KOBAYASHI, Kunpei
Tokyo 205-8555 (JP)**

(74) Representative: **Grünecker Patent- und
Rechtsanwälte
PartG mbB
Leopoldstraße 4
80802 München (DE)**

(56) References cited:
**EP-A1- 0 736 188      EP-A1- 1 887 387
WO-A1-01/79923      WO-A1-2006/129418
JP-A- 2002 148 608   JP-A- 2003 279 988
US-A1- 2006 289 880  US-A1- 2006 290 844
US-A1- 2007 147 066**

**Description**

Technical Field

The present invention relates to a reflection/transmission type liquid crystal display apparatus.

Background Art

As a reflection/transmission type liquid crystal display apparatus that performs reflection display using external light and transmission display using illumination light from a surface light source placed on the opposite side to the observation side, an apparatus having a surface light source placed on the opposite side to the observation side of a liquid crystal display device and having a semi-transmission/reflection film placed on the rear side (surface light source side) of the liquid crystal layer of the liquid crystal display device is known (see Jpn. Pat. Appln. KOKAI Publication No. 2002-107725).

In addition, as this reflection/transmission type liquid crystal display apparatus, there is known an apparatus in which a surface light source is placed on the opposite side of a liquid crystal display device to the observation side, each pixel of the liquid crystal display device is segmented into two areas, and a reflection display portion and a transmission display portion are formed for each of the pixels by providing a reflecting film behind a liquid crystal layer in one of the areas of each pixel (see Jpn. Pat. Appln. KOKAI Publication No. 2004-93715).

Also known from the prior art is a transflective LCD device which uses a quarter-wave plate, a reflective polariser and a set of crossed prism array in order to improve light utilisation efficiency of the backlight (JP-2003-279988 A).

The above conventional reflection/transmission type liquid crystal display apparatus cannot obtain bright reflection display and bright transmission display with good color balance.

**Disclosure of Invention**

An object of the present invention is to provide a liquid crystal display apparatus that can perform bright reflection display and bright transmission display with good color balance.

A liquid crystal display apparatus according to a first aspect of the present invention is defined in claim 1.

The liquid crystal display apparatus of the present invention can perform bright reflection display and bright transmission display with good color balance.

Advantages of the invention will be set forth in the description that follows, and in part will be obvious from the description, or may be learned by practice of the invention. Advantages of the invention may be realized and obtained by means of the instrumentalities and combinations particularly pointed out hereinafter.

Further advantageous embodiments are defined in claims 2 - 3.

**Brief Description of Drawings**

The accompanying drawings, which are incorporated in and constitute a part of the specification, illustrate embodiments of the invention, and together with the general description given above and the detailed description of the embodiments given below, serve to explain the principles of the invention.

FIG. 1 is an exploded perspective view of a liquid crystal display apparatus according to an embodiment of the present invention;

FIG. 2 is a side view of the liquid crystal display apparatus;

FIG. 3 is an enlarged sectional view of part of the liquid crystal display device of the liquid crystal display apparatus;

FIG. 4 is an enlarged view of part of first and second prism arrays constituting the reflector of the liquid crystal display apparatus;

FIG. 5 is a view showing the aligning direction of the liquid crystal molecules of the liquid crystal layer of the liquid crystal display device of the liquid crystal display apparatus, the directions of the transmission axes of a pair of polarizing plates, the directions of the transmission and reception axes of a reflecting/polarizing plate, and the direction of the slow axis of a λ/4 retardation plate;

FIG. 6 is a light beam chart of reflection display by the liquid crystal display apparatus;

FIG. 7 is a conceptual view of light reflection by the reflector;

FIG. 8 is a light beam chart of transmission display by the liquid crystal display apparatus;

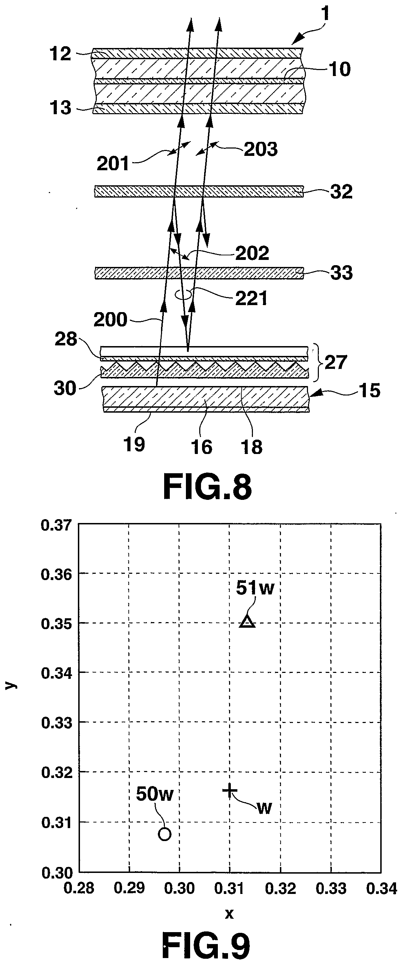

FIG. 9 is a view showing the coordinates of light, on a CIE chromaticity diagram, which is obtained by mixing colored light beams reciprocally transmitted through the filters of the respective colors when the liquid crystal display device of the liquid crystal display apparatus according to this embodiment is made to display white in comparison with the coordinates of light obtained by mixing colored light beams reciprocally transmitted through the filters of the respective colors provided for the liquid crystal display device of a conventional reflection/transmission type liquid crystal display apparatus;

FIG. 10 is a view showing coordinates on a CIE chromaticity diagram in reflection display by the liquid crystal display apparatus according to the embodiment and the conventional reflection/transmission type liquid crystal display apparatus when each liquid crystal displace device is made to display white;

FIG. 11 is an enlarged sectional view of a light-emitting element of a surface light source in the liquid crystal display apparatus according to this embodiment;

FIG. 12 is a spectral distribution chart of light beams respectively emitted by a pseudo-white-light-emitting element having a red/green fluorescent layer provided on the irradiation side of a blue LED, a conventional pseudo-white-light-emitting element having a yellow fluorescent layer provided on the irradiation side of a blue LED, and a primary color light-emitting element comprising red, green, and blue LEDs; and

FIG. 13 is a view showing coordinates on a CIE chromaticity diagram in transmission display by the liquid crystal display apparatus according to the embodiment, a liquid crystal display apparatus according to Comparative Example 1 having a conventional pseudo-white-light-emitting element provided for the surface light source, and a liquid crystal display apparatus according to Comparative Example 2 having a primary color light-emitting element provided for the surface light source, in a case in which the respective apparatuses are made to display white.

Best Mode for Carrying out the Invention

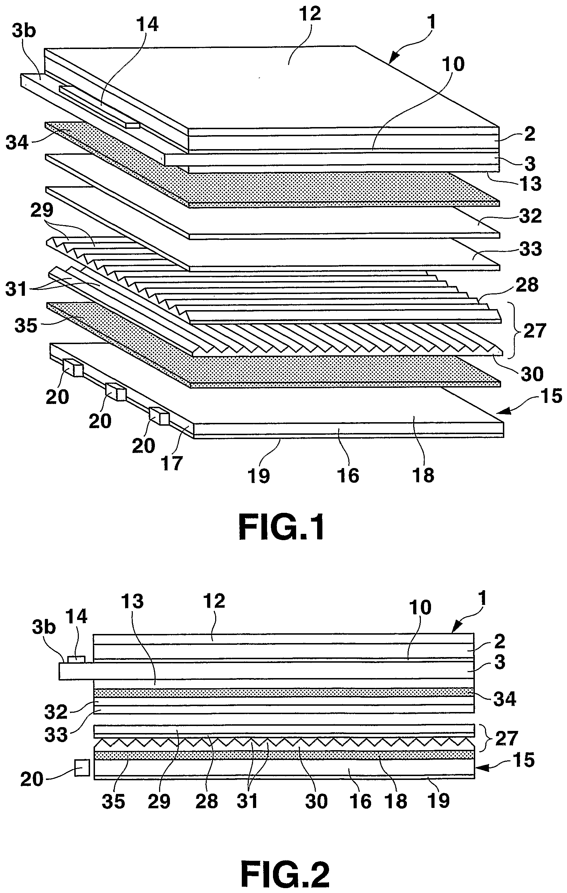

FIGS. 1 to 13 show an embodiment of the present invention. FIG. 1 is an exploded perspective view of a liquid crystal display apparatus. FIG. 2 is a side view of the liquid crystal display apparatus.

As shown in FIGS. 1 and 2, this embodiment of the present invention relates to a reflection/transmission type liquid crystal display apparatus that performs reflection display and transmission display. This liquid crystal display apparatus comprises a liquid crystal display device 1, a surface light source 15 that is placed on the opposite side (to be referred to as the rear side hereinafter) of the liquid crystal display device 1 to the observation side and applies illumination light to the liquid crystal display device 1, and a reflector 27 that is placed between the liquid crystal display device 1 and the surface light source 15 and reflects, toward the liquid crystal display device 1, the light that has entered from the observation side and has been transmitted through the liquid crystal display device 1.

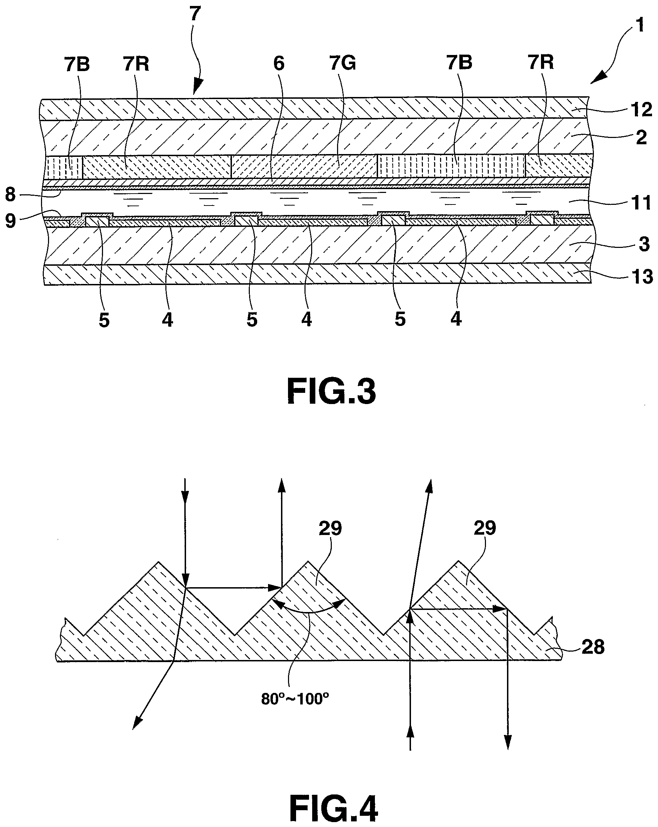

FIG. 3 is an enlarged sectional view of part of the liquid crystal display device 1. The liquid crystal display device 1 comprises a pair of transparent substrates 2 and 3 placed to face each other through a predetermined gap, a liquid crystal layer 11 sealed in the gap between the pair of substrates 2 and 3, transparent electrodes 6 and 4 that are provided on at least one of the inner surfaces of the pair of substrates 2 and 3 that face each other, e.g., the respective inner surfaces of the pair of substrates 2 and 3, and control the transmission of light by changing the aligned state of the liquid crystal molecules of the liquid crystal layer 11 by voltage application, and a pair of polarizing plates 12 and 13 respectively bonded to the outer surfaces of the pair of substrates 2 and 3. The polarizing plate 12 of the pair of polarizing plates 12 and 13, which is located on the observation side, comprises an antiglare polarizing plate having an outer surface with antireflection treatment.

The liquid crystal display device 1 is, for example, an active matrix liquid crystal display device. Pixel electrodes 4 are arranged in a matrix form in the row and column directions on the inner surface of one of the pair of transparent substrates 2 and 3 of the liquid crystal display device 1, e.g., the rear-side substrate 3, together with TFTs (Thin-Film Transistors) 5 arranged in correspondence with the pixel electrodes 4, scanning lines (none are shown) that supply gate signals to the TFTs 5 on the respective rows, and signal lines (none are shown) that supply data signals to the TFTs 5 on the respective columns. The opposed electrode 6 in the form of a single film that faces the pixel electrodes 4 is provided on the inner surface of the other substrate, i.e., the observation-side substrate 2.

Although FIG. 3 is a simplified view of the TFTs 5, each TFT 5 comprises a gate electrode formed on the substrate surface of the rear-side substrate 3, a transparent gate insulating film formed on almost the entire substrate surface so as to cover the gate electrode, an i-type semiconductor film formed on the gate insulating film so as to face the gate electrode, and drain and source electrodes respectively formed on n-type semiconductor films on two end portions of the i-type semiconductor film. The pixel electrodes 4 are formed on the gate insulating film. The source electrodes of the corresponding TFTs 5 are connected to the corresponding pixel electrodes 4.

The scanning lines are formed on the surface of the rear-side substrate 3 so that each scanning line extends along one side of a corresponding one of the pixel electrode rows. The scanning lines are respectively connected to the gate electrodes of the TFTs 5 on the respective rows. The signal lines are formed on the gate insulating film so that each signal line extends along one side of a corresponding one of the pixel electrode columns. The signal lines are respectively connected to the drain electrodes of the TFTs on the respective columns.

The liquid crystal display device 1 further includes a color filter 7 comprising red, green, and blue filters 7R, 7G, and 7B respectively provided in correspondence with pixels comprising areas where the pixel electrodes 4 face the opposed electrode 6. The color filter 7 is provided on the inner surface of one of the pair of substrates, e.g., the observation-side substrate 2. The opposed electrode 6 is formed on the color filter 7.

Aligning films 8 and 9 are formed on the inner surfaces of the pair of substrates 2 and 3 so as to cover the electrodes 4 and 6. Aligning treatment is applied to the inner surfaces of the pair of substrates 2 and 3 by rubbing the film surfaces of the aligning films 8 and 9 in predetermined directions, respectively.

The pair of substrates 2 and 3 are joined to each other via a frame-like seal member 10 (see FIGS. 1 and 2) surrounding the screen area where the pixels are arranged in a matrix form. The liquid crystal layer 11 is sealed in the area surrounded by the seal member 10 between the substrates 2 and 3.

As shown in FIGS. 1 and 2, the rear-side substrate 3 has a protruding portion 3b that extends outward from the observation-side substrate 2. The scanning lines and signal lines provided on the inner surface of the rear-side substrate 3 are connected to a display driver 14 mounted on the protruding portion 3b.

As shown in FIGS. 1 and 2, the surface light source 15 comprises a light guide plate 16 placed on the back surface of the liquid crystal display device 1 and light-emitting elements 20 (three elements in FIG. 1) that are arranged to face an incident surface 17 of the light guide plate 16 and emit light toward the incident surface 17. The light guide plate 16 comprises a plate-like transparent member having an area corresponding to the entire screen area of the liquid crystal display device 1. The incident surface 17 is formed on one end face of the light guide plate 16. An irradiation surface 18 for light entering through the incident surface 17 is formed on the plate surface facing the liquid crystal display device 1. A reflecting film 19 is provided on the opposite side of the light guide plate 16 to the irradiation surface 18.

The surface light source 15 guides light emitted by the light-emitting elements 20 through the light guide plate 16 and applies the light to the liquid crystal display device 1. The light-emitting elements 20 are turned on to perform transmission display using illumination light from the surface light source 15.

The light irradiated from the light-emitting elements 20 enters the light guide plate 16 through the incident surface 17 and is diffused in the light guide plate 16 while being repeatedly internally reflected by the reflecting film 19 and the irradiation surface 18 of the light guide plate 16. The light diffused in the light guide plate 16 is irradiated from the entire irradiation surface 18 of the light guide plate 16 toward the liquid crystal display device 1.

The surface light source 15 in this embodiment has the reflecting film 19 formed in tight contact with the plate surface on the opposite side of the light guide plate 16 to the irradiation surface 18. However, the surface light source to be used is not limited to this. The reflecting film 19 may be provided on the light guide plate 16 through a gap. In this case, light entering in the light guide plate 16 through the incident surface 17 is internally reflected by the plate surface on the opposite side of the light guide plate 16 to the irradiation surface 18 toward the irradiation surface 18, and leakage light transmitted through the interface between the plate surface on the opposite side and the air layer in the gap is reflected by the reflecting film 19 and returns into the light guide plate 16.

As shown in FIGS. 1 and 2, the reflector 27, placed between the liquid crystal display device 1 and the surface light source 15, comprises a first prism array 28 and a second prism array 30 placed on the surface side of the first prism array 28 that faces either the liquid crystal display device 1 or the surface light source 15. In this embodiment, the second prism array 30 is placed on the surface side facing the surface light source 15. The first and second prism arrays 28 and 30 reflect, toward the liquid crystal display device 1, the light that has entered from the observation side and has been transmitted through the liquid crystal display device 1.

The first and second prism arrays 28 and 30 respectively have linear prism portions 29 and 31. The prism portions 29 and 31 each are formed parallel on one surface of a transparent sheet-like member made of acrylic resin or the like. The prism portions 29 of the first prism array 28 are formed linearly to be parallel to a predetermined direction, e.g., the horizontal direction of the screen area of the liquid crystal display device 1. The prism portions 31 of the second prism array 30 are formed linearly to be nearly perpendicular to the longitudinal direction of the prism portions 29 of the first prism array 28.

FIG. 4 is an enlarged view of part of one of the first and second prism arrays 28 and 30, e.g., the first prism array 28. Each of the prism portions 29 and 31 of the first and second prism arrays 28 and 30 has an isosceles triangular shape having two sides that have the same inclination angle with respect to the normal direction of the liquid crystal display device 1 (the direction perpendicular to the substrates 2 and 3 of the liquid crystal display device 1) and the same length. Each prism portion also has a sectional shape whose vertical angle defined by the equilateral sides across the normal direction of the liquid crystal display device falls within the range of 80° to 100°, and is preferably set to nearly 90°.

FIG. 4 shows reflected and transmitted light beams in the first prism array 28. As shown in FIG. 4, in the same manner in the first and second prism arrays 28 and 30, most of the light entering from the surface sides on which the prism portions are formed is reflected by the interfaces between the inclined surfaces of the prism portions 29 and 31 and air layers as outside air. That is, the incident light is sequentially reflected by an inclined surface of one of adjacent prism portions and an inclined surface of the other prism portion to be irradiated in the direction in which the light enters.

The light that has entered from the surface sides of the first and second prism arrays 28 and 30 on the opposite side to the surfaces on which the prism portions are formed is refracted by the respective prism portions, transmitted through the respective prism portions, and irradiated from them.

Note that, of the light that has struck the interfaces between the inclined surfaces of the prism portions 29 and 31 and air layers, light vibrating within planes parallel to the interfaces is reflected at a higher reflectance, and light vibrating within planes perpendicular to the interfaces is transmitted at a higher transmittance. For this reason, the respective light beams reflected by the prism arrays 28 and 30 contain many polarized light components vibrating within planes parallel to the inclined surfaces of the prism portions 29 and 31. The respective light beams transmitted through the prism arrays 28 and 30 contain large proportions of polarized light components vibrating within planes perpendicular to the inclined surfaces of the prism portions 29 and 31.

The first prism array 28 is placed so that the prism portion formation surface or the opposite surface, e.g., the prism portion formation surface, faces the liquid crystal display device 1. The second prism array 30 is placed on the surface side of the first prism array 28 that faces the surface light source 15 so that the apexes of the prism portions 31 are in contact with or near the opposite surface of the first prism array 28.

As shown in FIGS. 1 and 2, this liquid crystal display apparatus comprises a reflecting/polarizing plate 32 placed between the liquid crystal display device 1 and the reflector 27 and a retardation plate 33 placed between the reflecting/polarizing plate 32 and the reflector 27.

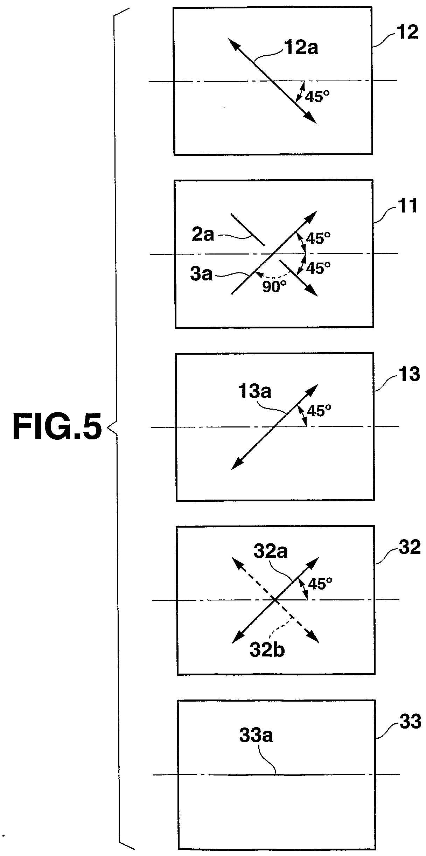

The reflecting/polarizing plate 32 is a polarizing plate having a transmission axis 32a that transmits one of linearly polarized light components that are perpendicular to each other and a reflection axis 32b that reflects the other linearly polarized light component (see FIG. 5). The reflecting/polarizing plate 32 thus transmits a polarized light component of incident light that is parallel to the transmission axis 32a, and reflects a polarized light component parallel to the reflection axis 32b. The retardation plate 33 comprises a $\lambda/4$ retardation plate that provides a phase difference of 1/4 wavelength between ordinary light and extraordinary light of transmitted light.

FIG. 5 shows the aligning direction of the liquid crystal molecules of the liquid crystal layer 11 of the liquid crystal display device 1, the directions of transmission axes 12a and 13a of the pair of polarizing plates 12 and 13, the directions of the transmission axis 32a and reflection axis 32b of the reflecting/polarizing plate 32, and the direction of a slow axis 33a of the $\lambda/4$ retardation plate 33.

The liquid crystal display device 1 is, for example, a TN liquid crystal display device. Aligning treatment is applied to the inner surface of the observation-side substrate 2 of the pair of substrates 2 and 3 (the film surface of an aligning film 8) in a direction 2a at 45° counterclockwise with respect to the abscissa (chain line) of the screen area when viewed from the observation side. Aligning treatment is applied to the inner surface of the rear-side substrate 3 (the film surface of the aligning film 8) in a direction 3a at 45° clockwise with respect to the abscissa when viewed from the observation side. The liquid crystal molecules of the liquid crystal layer 11 are twisted/aligned at a twist angle of nearly 90° clockwise from the rear-side substrate 3 to the observation-side substrate 2 when viewed from the observation side. The observation-side polarizing plate 12 is placed so that the transmission axes 12a and 13a are perpendicular or parallel to the aligning treatment direction of the observation-side substrate 2. The rear-side polarizing plate 13 is placed so that the transmission axis 13a is perpendicular or parallel to the transmission axis 12a of the observation-side polarizing plate 12.

The reflecting/polarizing plate 32 is placed so that the transmission axis 32a is parallel to the transmission axis 13a of the polarizing plate 13 on the opposite side to the observation side of the liquid crystal display device 1. The $\lambda/4$ retardation plate 33 is placed so that the slow axis 33a is set in a direction of 45° (a direction parallel to the abscissa) clockwise with respect to the transmission axis 32a of the reflecting/polarizing plate 32 when viewed from the observation side.

As described above, at least one of the first and second prism arrays 28 and 30 is placed so that the angle defined by the direction in which the prism portions 29 or 31 extend linearly and the transmission axis of the reflecting/polarizing plate becomes nearly 45°.

As shown in FIGS. 1 and 2, this liquid crystal display apparatus comprises a first diffusion layer 34 provided between the liquid crystal display device 1 and the reflecting/polarizing plate 32, and a second diffusion layer 35 provided between the surface light source 15 and the reflector 27. The first diffusion layer 34 has a haze value of 55 to 85%, and the second diffusion layer 35 has a haze value of 20 to 50%.

The first diffusion layer 34 comprises, for example, a transparent adhesive layer dispersed with light scattering particles. The reflecting/polarizing plate 32 is bonded to the first diffusion layer 34 on the outer surface of the rear-side polarizing plate 13 of the liquid crystal display device 1. The second diffusion layer 35 is made of, for example, a transparent resin sheet dispersed with light scattering particles, and is bonded to the irradiation surface 18 of the light guide plate 16 of the surface light source 15.

In this liquid crystal display apparatus, the surface light source 15 that applies illumination light to the liquid crystal display device 1 is placed on the rear side of the liquid crystal display device 1 (the opposite side to the observation side), and the reflector 27 comprising the first and second prism arrays 28 and 30 having the prism portions 29 and 31 each formed on one surface of the transparent sheet-like member is placed between the liquid crystal display device 1 and the surface light source 15. With this arrangement, the light that has entered from the observation side and has been transmitted through the liquid crystal display device 1 can be reflected by the reflector 27 toward the liquid crystal display device 1, and illumination light from the surface light source 15 can be transmitted through the reflector 27 and applied to the liquid crystal display device 1. This apparatus can thus perform reflection display using external light and transmission display using illumination light from the surface light source 15 without using any semitransparent reflecting film as in the conventional reflection/transmission type liquid crystal display apparatus or forming a reflection display portion and a transmission display portion for each pixel of a liquid crystal display device.

In this liquid crystal display apparatus, the reflector 27 comprises the first prism array 28 having the linear prism portions 29 formed parallel to each other and the second prism array 30 that is placed on the opposite surface side of the first prism array 28 that faces the surface light source 15 and has the linear prism portions 31 that are nearly perpendicular to the prism portions 29 of the first prism array 28 and are formed parallel to each other. With this arrangement, in the above reflection display, the light that has entered from the observation side, has been transmitted through the liquid crystal display device 1, and has struck the reflector 27 can be reflected by the first prism array 28, and the light transmitted through the first prism array 28 without being reflected can be reflected by the second prism array 30. This can increase the brightness of the reflection display.

That is, the first and second prism arrays 28 and 30 reflect, at a higher reflectance, polarized light components, of the light that has struck the interfaces between the inclined surfaces of the prism portions 29 and 31 and the air layers, which vibrate within planes parallel to the interfaces, and transmit, at a higher transmittance, polarized light components, of the incident light, which vibrate within planes perpendicular to the inclined surfaces of the prism portions 29. Thus, the light transmitted through the first prism array 28 without being reflected contains a large proportion of polarized light components that vibrate within planes perpendicular to the inclined surfaces of the prism portions 29 of the first prism array 28. The prism portions 31 of the second prism array 30 are formed linearly to be perpendicular to the longitudinal direction of the prism portions 29 of the first prism array 28. With this arrangement, the light transmitted through the first prism array 28 without being reflected is reflected by the second prism array 30 at a higher reflectance.

In addition, the reflecting/polarizing plate 32 is placed between the liquid crystal display device 1 and the reflector 27, and the $\lambda/4$ retardation plate 33 is placed between the reflecting/polarizing plate 32 and the reflector 27. This can further improve the use efficiency of incident light in the reflection display and also improve the use efficiency of illumination light from the surface light source 15 in the transmission display, thereby performing reflection display and transmission display with higher brightness.

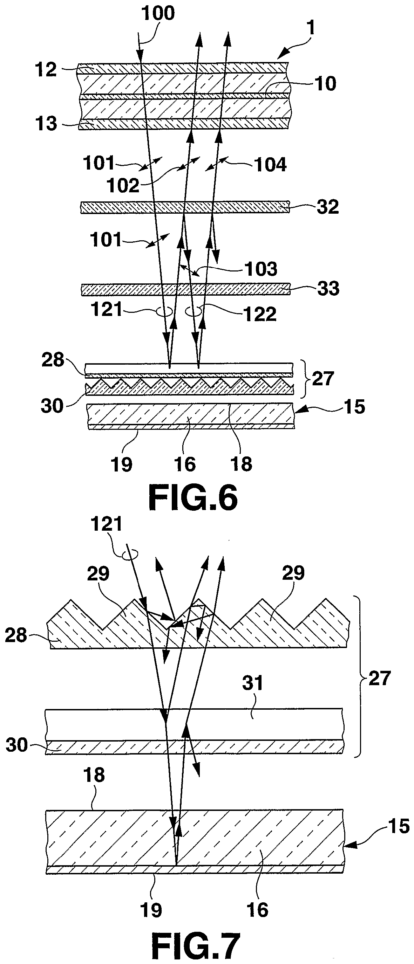

FIG. 6 is a light beam chart of reflection display in a bright state that is performed by the liquid crystal display apparatus. In reflection display, external light (unpolarized light) 100 entering from the observation side enters the liquid crystal display device 1 upon being linearly polarized by the observation-side polarizing plate 12, and is transmitted through the liquid crystal layer 11 and the rear-side polarizing plate 13. That is, the external light 100 becomes linearly polarized light 101 parallel to the transmission axis 13a of the rear-side polarizing plate 13 and is irradiated to the rear side of the liquid crystal display device 1.

Since the reflecting/polarizing plate 32 is placed so that the transmission axis 32a is parallel to the transmission axis 13a of the rear-side polarizing plate 13 of the liquid crystal display device 1, the linearly polarized light 101 irradiated to the rear side of the liquid crystal display device 1 is transmitted through the reflecting/polarizing plate 32. The linearly polarized light 101 transmitted through the reflecting/polarizing plate 32 strikes the $\lambda/4$ retardation plate 33, and is provided with a phase difference of 1/4 wavelength by the $\lambda/4$ retardation plate 33 to become circularly polarized light 121. This light strikes the reflector 27 and is reflected by the first and second prism arrays 28 and 30 of the reflector 27 at a higher reflectance.

FIG. 7 is a conceptual view of light reflection by the reflector 27. FIG. 7 shows the reflector 27 viewed from the horizontal direction of FIG. 6 (the direction perpendicular to the longitudinal direction of the prism portions 29 of the first prism array 28).

As shown in FIG. 7, the light applied from the liquid crystal display device 1 side to the reflector 27 strikes the first prism array 28 first. This light is then reflected by the prism portions 29 of the first prism array 28 and irradiated to the liquid crystal display device 1 side. That is, as shown in FIG. 4, the light that has entered the first prism array 28 is sequentially reflected by one of the inclined surfaces of the adjacent prism portions 29 and the inclined surface of the other prim portion 29 and is irradiated to the liquid crystal display device 1 side.

The light transmitted through the first prism array 28 without being reflected strikes the second prism array 30 and is reflected by the prism portions 31 of the second prism array 30. That is, the light that has struck the second prism array 30 is sequentially reflected by the inclined surface of one of the adjacent prism portions 31 and the inclined surface of the other prism portion 31, and strikes the first prism array 28 again. This light is transmitted through the first prism array 28 and irradiated to the liquid crystal display device 1 side.

Of the light that has been transmitted through the first prism array 28 and has struck the second prism array 30, the light transmitted through the second prism array 30 without being reflected by the second prism array 30 strikes the light guide plate 16 of the surface light source 15 and is reflected by the reflecting film 19 provided on the opposite side to the irradiation surface 18. The reflected light is transmitted again through the second prism array 30 and the first prism array 28 and irradiated to the liquid crystal display device 1 side.

Of the light that has been reflected by the second prism array 30 and has struck the first prism array 28 again, the light reflected by the first prism array 28 to the rear side (the opposite side to the liquid crystal display device 1) is reflected by the second prism array 30 again. This light is transmitted through the first prism array 28 and irradiated to the liquid crystal display device 1 side.

Likewise, of the light that has been reflected by the reflecting film 19 of the surface light source 15, the light reflected by the first prism array 28 or the second prism array 30 to the rear side is reflected by the second prism array 30 or the reflecting film 19 again. This light is transmitted through the second prism array 30 and the first prism array 28 and irradiated to the liquid crystal display device 1 side.

In this case, the light applied from the liquid crystal display device 1 side to the reflector 27 is the circularly polarized light 121. The light reflected by the first and second prism arrays 28 and 30 of the reflector 27 becomes light containing linearly polarized light vibrating within planes parallel to the inclined surfaces of the prism portions 29 and 31 of the prism arrays 28 and 30 and circularly polarized light without any conversion, and returns to the $\lambda/4$ retardation plate 33 side. The light transmitted through the prism arrays 28 and 30 becomes light containing linearly polarized light vibrating within planes perpendicular to the inclined surfaces of the prism portions 29 and 31 and circularly polarized light without any conversion and travels.

The light containing the linearly polarized light and circularly polarized light reflected by the reflector 27 strikes the reflecting/polarizing plate 32, with the linearly polarized light being provided with a phase difference of 1/4 wavelength by the $\lambda/4$ retardation plate 33 to become circularly polarized light, and the circularly polarized light being converted into linearly polarized light parallel to the reflection axis 32b of the reflecting/polarizing plate 32. Of the circularly polarized light that has struck the reflecting/polarizing plate 32, a linearly polarized light component 102 parallel to the transmission axis 32a of the reflecting/polarizing plate 32 is transmitted through the reflecting/polarizing plate 32 and strikes the liquid crystal display device 1 again. This light component is transmitted through the liquid crystal display device 1 and irradiated to the observation side. Linearly polarized light 103 of a polarized light component of the linearly and circularly polarized light that has struck the reflecting/polarizing plate 32 that is parallel to the reflection axis 32b of the reflecting/polarizing plate 32 is reflected by the reflecting/polarizing plate 32 again and strikes the $\lambda/4$ retardation plate 33 again.

The linearly polarized light 103 reflected by the reflecting/polarizing plate 32 is converted into circularly polarized light 122 by the $\lambda/4$ retardation plate 33 and strikes the reflector 27. This light is reflected by the reflector 27 as shown in FIG. 7. The reflected light (light containing linearly polarized light and circularly polarized light) strikes the $\lambda/4$ retardation plate 33, as shown in FIG. 6. The circularly polarized light that has struck the $\lambda/4$ retardation plate 33 is converted into linearly polarized light parallel to the transmission axis 32a of the reflecting/polarizing plate 32 by the $\lambda/4$ retardation plate 33. This light strikes the reflecting/polarizing plate 32 and is transmitted through it. The linearly polarized light that has struck the $\lambda/4$ retardation plate 33 becomes circularly polarized light. Of the circularly polarized light, a linearly polarized light component parallel to the transmission axis 32a of the reflecting/polarizing plate 32 is transmitted through the reflecting/polarizing plate 32. Linearly polarized light 104 transmitted through the reflecting/polarizing plate 32 strikes the liquid crystal display device 1 again, is transmitted through the liquid crystal display device 1, and irradiated to the observation side.

With this operation, this liquid crystal display apparatus can efficiently reflect light applied from the observation side and transmitted through the liquid crystal display device 1 and make the light strike the liquid crystal display device 1 again. In addition, the reflector is placed so that the angle defined by the direction in which the prism portions of at least one of the first and second prism arrays extend linearly and the transmission axis of the reflecting/polarizing plate becomes nearly 45°. With this arrangement, the linearly polarized light reflected by the reflector 27 is provided with a phase difference of 1/4 wavelength by the $\lambda/4$ retardation plate 33 to become circularly polarized light. This light strikes the reflecting/polarizing plate 32, and a linearly polarized light component parallel to the transmission axis 32a is transmitted through the reflecting/polarizing plate 32. This can improve the use efficiency of incident light in the reflection display and perform reflection display with high brightness.

FIG. 8 is a light beam chart of transmission display by the above liquid crystal display apparatus. In transmission display, the illumination light (unpolarized light) emitted from the surface light source 15 is transmitted through the second prism array 30 and first prism array 28 of the reflector 27 and strikes the $\lambda/4$ retardation plate 33 as an illumination light 200.

Note that the illumination light 200 applied from the reflector 27 contains light reflected by the second prism array 30 and reflected by the reflecting film 19 of the surface light source 15, light reflected by the first prism array 28 without being transmitted, reflected by the reflecting film 19 of the surface light source 15, and transmitted through the second prism array 30, and light reflected by the first prism array 28, reflected by the second prism array 30, and transmitted through the second prism array 30 again. The illumination light 200 transmitted through the first prism array 28 strikes the $\lambda/4$ retardation plate 33.

The illumination light 200 transmitted through the reflector 27 is transmitted through the $\lambda/4$ retardation plate 33 and strikes the reflecting/polarizing plate 32. Of this light, linearly polarized light 201 of a polarized light component parallel to the transmission axis 32a of the reflecting/polarizing plate 32 is transmitted through the reflecting/polarizing plate 32 and strikes the liquid crystal display device 1. This light is then transmitted through the liquid crystal display device 1 and irradiated to the observation side.

Of the light that has struck the reflecting/polarizing plate 32, linearly polarized light 202 of a polarized light component parallel to the reflection axis 32b of the reflecting/polarizing plate 32 is reflected by the reflecting/polarizing plate 32 and is provided with a phase difference of λ/4 wavelength by the λ/4 retardation plate 33 to become circularly polarized light 221. This light then strikes the reflector 27. The circularly polarized light that has struck the reflector 27 becomes light containing light containing circularly polarized light without any conversion and linearly polarized light and reflected by the reflector 27. The circularly polarized light is converted into linearly polarized light parallel to the transmission axis 32a of the reflecting/polarizing plate 32 by the λ/4 retardation plate 33, and strikes and is transmitted through the reflecting/polarizing plate 32. The linearly polarized light reflected by the reflector 27 is converted into circularly polarized light by the λ/4 retardation plate 33, and strikes the reflecting/polarizing plate 32. Of the circularly polarized light that has struck the reflecting/polarizing plate 32, a polarized light component parallel to the transmission axis 32a of the reflecting/polarizing plate 32 is transmitted through the reflecting/polarizing plate 32. Linearly polarized light 203 transmitted through the reflecting/polarizing plate 32 strikes the liquid crystal display device 1. This light is then transmitted through the liquid crystal display device 1 and irradiated to the observation side.

With this operation, this liquid crystal display apparatus can efficiently make the illumination light emitted from the surface light source 15 strike the liquid crystal display device 1. This can improve the use efficiency of illumination light in the transmission display and perform transmission display with high brightness.

In this liquid crystal display apparatus, the liquid crystal display device 1 includes the color filter 7 comprising the red, green, and blue filters 7R, 7G, and 7B. The color filter 7 has spectral characteristics that the x- and y-coordinate values of a white point of light, on a CIE chromaticity diagram, which is obtained by mixing light beams of the respective colors that are colored by being transmitted through the red, green, and blue filters 7R, 7G, and 7B twice, respectively, when white is displayed by red, green, and blue pixels respectively fall within the range of x = 0.280 to 0.320 and the range of y = 0.285 to 0.325.

On the CIE chromaticity diagram of the color filter 7, a white point can be obtained as follows when white is displayed by red, green, and blue pixels.

Letting W(A) be the spectral transmittance of mixed light obtained by mixing light beams of the respective colors transmitted through the red, green, and blue filters 7R, 7G, and 7B, $T_R(\lambda)$ be the spectral transmittance of the red filter 7R, $T_G(\lambda)$ be the spectral transmittance of the green filter 7G, and $T_B(\lambda)$ be the spectral transmittance of the blue filter 7B, the spectral transmittance W(A) of the mixed light is represented by

$$W(\lambda) = T_R(\lambda) + T_G(\lambda) + T_B(\lambda).$$

Three stimulus values X, Y, and Z in an XYZ color display system in the visible light band of 400 to 700 nm are expressed by

$$X = \int_{400}^{700} W(\lambda) \cdot \overline{x}(\lambda) \cdot d\lambda, \qquad \cdots (1)$$

$$Y = \int_{400}^{700} W(\lambda) \cdot \overline{y}(\lambda) \cdot d\lambda, \qquad \cdots (2)$$

$$Z = \int_{400}^{700} W(\lambda) \cdot \overline{z}(\lambda) \cdot d\lambda. \qquad \cdots (3)$$

A spectral transmittance W'(λ) of the mixed light in reflection display that is obtained when incident light is reciprocally transmitted through the color filter 7 is expressed by

$$W'(\lambda) = T_R^2(\lambda) + T_G^2(\lambda) + T_B^2(\lambda).$$

In this case, the three stimulus values X, Y, and Z in the XYZ color display system are expressed by

$$X = \int_{400}^{700} W'(\lambda) \cdot \overline{x}(\lambda) \cdot d\lambda, \qquad \cdots (4)$$

$$Y = \int_{400}^{700} W'(\lambda) \cdot \overline{y}(\lambda) \cdot d\lambda, \qquad \cdots (5)$$

$$Z = \int_{400}^{700} W'(\lambda) \cdot \overline{z}(\lambda) \cdot d\lambda. \qquad \cdots (6)$$

The x- and y-coordinate values of a white point on the CIE chromaticity diagram are expressed by equations (7) and (8) using the three stimulus values X, Y, and Z:

$$x = \frac{X}{X + Y + Z}, \qquad \cdots (7)$$

$$y = \frac{Y}{X + Y + Z}. \qquad \cdots (8)$$

The x- and y-coordinate values of the white point on the CIE chromaticity diagram of the color filter 7 can be obtained by equations (7) and (8) on the basis of the values X, Y, and Z given by equations (4) to (6).

That is, the filters 7R, 7G, and 7B of the respective colors of the color filter 7 have spectral characteristics that when white is displayed by red, green, and blue pixels, the x- and y-coordinate values of the white point obtained by squaring the integral values of the spectral distribution curves of the spectral transmittances $T_R(\lambda)$, $T_G(\lambda)$, and $T_B(\lambda)$ of the red, green, and blue color filters 7R, 7G, and 7B fall within the range of x = 0.280 to 0.320 and the range of y = 0.285 to 0.325, respectively.

FIG. 9 shows a white point $50_W$ of light, on the CIE chromaticity diagram, which is obtained by mixing colored light beams reciprocally transmitted through the color filter 7 in this embodiment in comparison with a white point $51_W$ of mixed light of colored light beams reciprocally transmitted through the color filter provided for the liquid crystal display device of the conventional reflection/transmission type liquid crystal display apparatus. The white point $50_W$ of the colored light reciprocally transmitted through the color filter 7 in this embodiment falls within the range of x = 0.280 to 0.320 and the range of y = 0.285 to 0.325 (in FIG. 9, x = 0.297 and y = 0.308), and is near an achromatic color point W (x = 0.310 and y = 0.317). In contrast to this, the white point $51_W$ of the colored light reciprocally transmitted through the conventional color filter is located farther from the achromatic color point W than the white point $50_W$ in this embodiment.

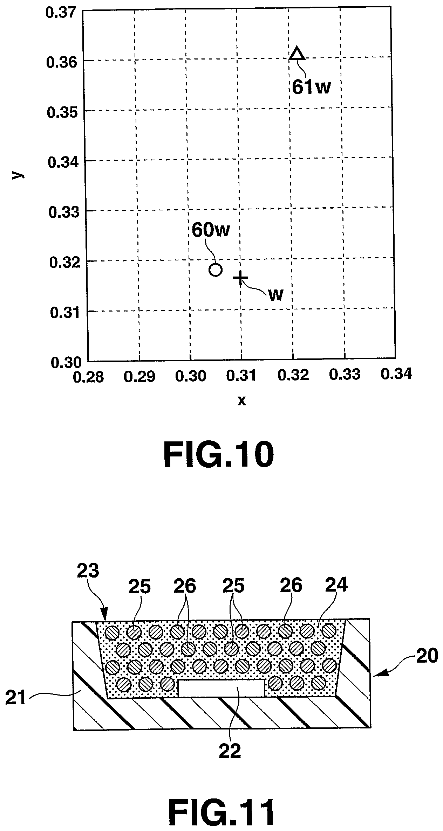

FIG. 10 shows white points on the CIE chromaticity diagram in reflection display by the liquid crystal display apparatus using the liquid crystal display device having the color filter 7 in the above embodiment and the conventional reflection/transmission type liquid crystal display apparatus. A white point $60_W$ in the liquid crystal display apparatus of this embodiment is obtained when the spectral characteristics of the filters 7R, 7G, and 7B of the respective colors of the color filter 7 are set so that the white point of color-mixed light of light beams of the respective colors reciprocally transmitted through the filters 7R, 7G, and 7B of the respective colors is represented by x = 0.297m and y = 0.308.

As shown in FIG. 10, the white point $60_W$ in reflection display by the liquid crystal display apparatus of the above embodiment is represented by x = 0.305 and y = 0.318, which is nearer the achromatic color point W than a white point $61_W$ in reflection display by the conventional reflection/transmission type liquid crystal display apparatus. Thus, it is possible to display a high-quality color image by reflection display.

In the liquid crystal display apparatus of the above embodiment, the color filter 7 preferably has spectral characteristics that the x- and y-coordinate values of the white point of the light, on the CIE chromaticity diagram, which is obtained by mixing light beams of the respective colors reciprocally transmitted through the filters 7R, 7G, and 7B of the respective colors are represented by x = 0.295 to 0.305 and y = 0.305 to 0.325. This allows the white point $60_W$ in reflection display to be located near the achromatic color point W, so that a high-quality color image is displayed by reflection display.

In addition, in this liquid crystal display apparatus, when each of the light-emitting elements 20 of the surface light source 15 comprises a pseudo-white-light-emitting element obtained by providing a fluorescent layer, which emits red fluorescence and green fluorescence by being excited by light emitted from a blue light-emitting diode (to be referred to as a blue LED hereinafter) that emits blue light, on the irradiation side of the blue LED, a high-quality color image, in which white display by red, green, and blue pixels is near achromatic color, can be displayed even in transmission display.

FIG. 11 is an enlarged sectional view of the light-emitting element 20. The light-emitting element 20 is formed by placing a blue LED 22 in the central portion of the inner bottom surface of a box-like housing 21 that is made of a resin molded product and has one open surface, and filling the housing 21 with a fluorescent layer (to be referred to as a red/green fluorescent layer hereinafter) 23 obtained by dispersing fine red fluorescent particles 25 and fine green fluorescent particles 26 in a transparent member 24 such as a transparent resin member at a predetermined proportion.

The pseudo-white-light-emitting element 20 irradiates pseudo-white light including blue light emitted from the blue LED 22 and red fluorescence and green fluorescence emitted from the fine red fluorescent particles 25 and fine green fluorescent particles 26 of the fluorescent layer 23.

Note that the pseudo-white-light-emitting element 20 is not limited to the arrangement shown in FIG. 11. For example, this element may be formed by stacking, on the irradiation side of the blue LED 22, a red fluorescent layer obtained by dispersing red fluorescent particles in a transparent member and a green fluorescent layer obtained by dispersing green fluorescent particles in a transparent member.

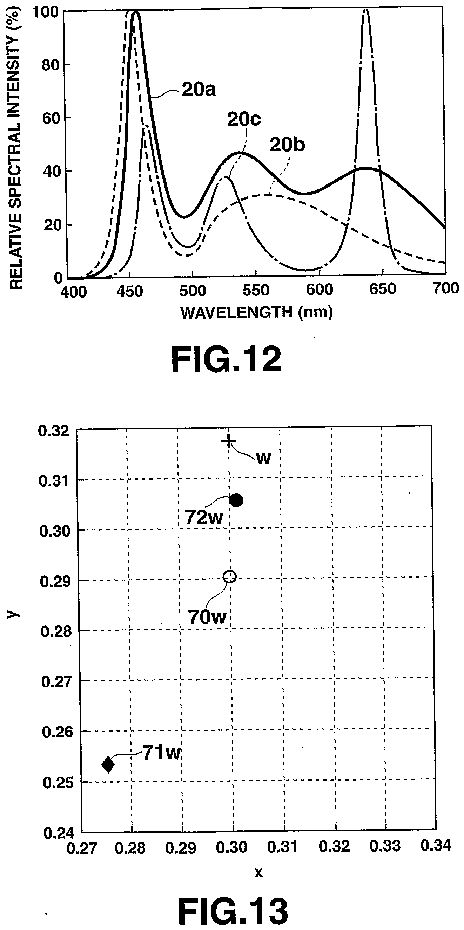

FIG. 12 is a spectral distribution chart of light beams respectively emitted by the pseudo-white-light-emitting element (to be referred to as the pseudo-white-light-emitting element of the embodiment hereinafter) 20 having the red/green fluorescent layer 23 provided on the irradiation side of the blue LED 22, a pseudo-white-light-emitting element (to be referred to as a conventional pseudo-white-light-emitting element hereinafter) having the yellow fluorescent layer provided on the irradiation side of the blue LED, and a light-emitting element (to be referred to as a primary color light-emitting element hereinafter) comprising red, green, and blue LEDs. Referring to FIG. 12, reference numeral 20a denotes the spectral distribution of light emitted from the pseudo-white-light-emitting element 20 of the embodiment; 20b, the spectral distribution of light emitted from the conventional pseudo-white-light-emitting element; and 20c, the spectral distribution of light emitted from the primary color light-emitting element.

As shown in FIG. 12, unlike the conventional pseudo-white-light-emitting element having the yellow fluorescent layer provided on the irradiation side of the blue LED emits pseudo-white light having light intensity peaks in two wavelength bands of 450 to 470 nm and 530 to 560 nm, the pseudo-white-light-emitting element 20 of the embodiment having the red/green fluorescent layer 23 provided on the irradiation side of the blue LED 22 emits pseudo-white light having light intensity peaks in the wavelength bands of 450 to 470 nm, 520 to 550 nm, and 620 to 650 nm.

The pseudo-white-light-emitting element 20 of the above embodiment can thus emit pseudo-white light having a spectral distribution similar to that of light emitted from a primary color light-emitting element comprising red, green, and blue LEDs, even though the element comprises a single-color LED. The pseudo-white-light-emitting element 20 preferably emits pseudo-white light having light intensity peaks at wavelengths of $465 \pm 10$ nm, $535 \pm 10$ nm, and $635 \pm 10$ nm.

FIG. 13 shows white points on the CIE chromaticity diagram in transmission display by the liquid crystal display apparatus of the above embodiment in which the surface light source 15 comprises the pseudo-white-light-emitting element 20 having the red/green fluorescent layer 23 provided on the irradiation side of the blue LED 22, a liquid crystal display apparatus according to Comparative Example 1 in which the surface light source 15 comprises a conventional pseudo-white-light-emitting element having a yellow fluorescent layer provided on the irradiation side of a blue LED, and a liquid crystal display apparatus according to Comparative Example 2 in which the surface light source 15 comprises a primary color light-emitting element comprising red, green, and blue LEDs.

Note that in each of these display apparatuses, the spectral characteristics of the filters of the respective colors of the color filter 7 of the liquid crystal display device 1 are set so that the white point $50_W$ of the colored light reciprocally transmitted through the filters of the respective colors is represented by x = 0.297 and y = 0.308. In these apparatuses, the color quality of reflection display is nearly the same.

As shown in FIG. 13, a white point $70_W$ in transmission display by the liquid crystal display device 1 of the liquid crystal display apparatus of the above embodiment is represented by x = 0.299 and y = 0.292, a white point $71_W$ in transmission display by the liquid crystal display apparatus of Comparative Example 1 is represented by x = 0.275 and y = 0.253, and a white point $72_W$ in transmission display by the liquid crystal display apparatus of Comparative Example 2 is represented by x = 0.302 and y = 0.306.

That is, the white point $70_W$ in transmission display by the liquid crystal display apparatus of the above embodiment is nearer the achromatic color point W than the white point $71_W$ in transmission display by the liquid crystal display apparatus of Comparative Example 1. Thus, this apparatus can display a high-quality color image almost equal in quality to that displayed by the liquid crystal display apparatus of Comparative Example 2.

In addition, the liquid crystal display apparatus of the above embodiment comprises the first diffusion layer 34 having a haze value of 55 to 85% between the liquid crystal display device 1 and the reflecting/polarizing plate 32. This can prevent the occurrence of moire fringe caused by the differences between the pitches of the prism portions 29 and 31 of the first and second prism arrays 28 and 30 of the reflector 27 and the arrangement pitch of the pixels of the liquid crystal display device 1, thereby further improving the quality of reflection display and transmission display. The haze value of the first diffusion layer 34 is preferably 55 to 85%, more preferably 80%. This can further effectively eliminate the occurrence of moire fringe.

Furthermore, the liquid crystal display apparatus of the above embodiment comprises the second diffusion layer 35 having a haze value of 20 to 50% between the surface light source 15 and the reflector 27. This allows illumination light from the surface light source 15 to strike the liquid crystal display device 1 with a uniform brightness distribution, performing high-quality transmission display without any brightness unevenness.

Note that the liquid crystal display apparatus of the above embodiment comprises the TN liquid crystal display device 1. However, the liquid crystal display device to be used is not limited to the TN type. For example, an STN liquid crystal display device may be used, in which liquid crystal molecules are twisted/aligned at a twist angle of 180° to 270° between a pair of substrates. In addition, a vertical alignment type liquid crystal display device may be used, in which liquid crystal molecules are aligned nearly vertically with respect to a substrate surface. Furthermore, a non-twisted horizontal alignment type liquid crystal display device may be used, in which liquid crystal molecules are aligned nearly parallel to a substrate surface with the molecule long axes being aligned in one direction. Moreover, a bend alignment type liquid crystal display device may be used, in which liquid crystal molecules are bent/aligned. Alternatively, a ferroelectric or antiferroelectric liquid crystal display device may be used.

The above liquid crystal display device is not limited to the one that has electrodes provided on the inner surfaces of one pair of substrates to form pixels. For example, a transverse electric field control type liquid crystal display device may be used, in which first electrodes for forming pixels are provided on one of the inner surfaces of one pair of substrates, second electrodes having elongated electrode portions that are insulated from the first electrodes are provided on a side nearer the liquid crystal layer side than the first electrodes, and transverse electric fields (electric fields in a direction along a substrate surface) are generated between the electrodes.

In the liquid crystal display apparatus of the above embodiment, the reflector 27 comprises the first and second prism arrays 28 and 30. However, the reflector 27 may comprise only one of the first and second prism arrays 28 and 30. In addition, the prism array to be used may be the one that has prisms in the form of a quadrangular pyramid arrayed in the row and column directions.

As described above, a liquid crystal display apparatus according to the present invention comprises a liquid crystal display device comprising a pair of opposing substrates, electrodes that are provided on at least one of opposing inner surfaces of the pair of substrates and control transmission of light by changing an aligned state of liquid crystal molecules by voltage application, a liquid crystal layer sealed between the pair of substrates, and a pair of polarizing plates that are respectively placed on outer surfaces of the pair of substrates, a surface light source that is placed on an opposite side of the liquid crystal display device to an observation side thereof and applies illumination light to the liquid crystal display device, and a reflector that is placed between the liquid crystal display device and the surface light source, comprises a prism array on which prism portions are formed, and reflects incident light from the observation side, which is transmitted through the liquid crystal display device, toward the liquid crystal display device by the prism array.

In the liquid crystal display apparatus, preferably, the prism array comprises prism portions that are arranged on a surface facing the liquid crystal display device so as to form recesses and projections, and reflect the incident light from the observation side by reflections at the surface on which the recesses and projections are formed. Preferably, the prism array comprises a transparent sheet-like member and prism portions formed on a surface of the sheet-like member that faces the liquid crystal display device. In addition, preferably, the reflector comprises a prism array having an array of prism portions each having an isosceles triangular sectional shape having two sides that have the same inclination angle with respect to a normal direction of the liquid crystal display device and the same length. In this case, desirably, the prism array comprises prism portions each having an isosceles triangular shape whose vertical angle defined by two sides across the normal direction of the liquid crystal display device falls within a range of 80° to 100°.

In the liquid crystal display apparatus, preferably, the reflector comprises a first prism array on which linear prism portions are formed parallel to each other, and a second prism array that is placed on a surface side of the first prism array that faces one of the liquid crystal display device and the surface light source, and on which linear prism portions substantially perpendicular to the prism portions of the first prism array are formed parallel to each other. In this case, desirably, the apparatus further comprises a reflecting/polarizing plate that is placed between the liquid crystal display device and the reflector and has a transmission axis that transmits one of linearly polarized light components perpendicular to each other and a reflection axis that reflects the other linearly polarized light component, with the transmission axis being parallel to a transmission axis of a polarizing plate on an opposite side of the liquid crystal display device to the observation side, and the reflector is placed so that an angle defined by a direction in which the prism portions of at least one of the first and second prism arrays linearly extend and the transmission axis of the reflecting/polarizing plate is substantially 45°.

Preferably, the liquid crystal display apparatus further comprises a reflecting/polarizing plate that is placed between the liquid crystal display device and the reflector and has a transmission axis that transmits one of linearly polarized light components perpendicular to each other and a reflection axis that reflects the other linearly polarized light component, with the transmission axis being parallel to a transmission axis of a polarizing plate on an opposite side of the liquid crystal display device to the observation side, and a λ/4 retardation plate that is placed between the reflecting/polarizing plate.and the reflector and provides a phase difference of 1/4 wavelength between ordinary light and extraordinary light of transmitted light. In this case, desirably, the apparatus further comprises a diffusion layer that is placed between the liquid crystal display device and the reflecting/polarizing plate and has a haze value of 55 to 85%.

In addition, in the liquid crystal display apparatus, preferably, the liquid crystal display device comprises a color filter having red, green, and blue filters formed for each of pixels corresponding to the electrodes, the color filter having a spectral characteristic that when white is displayed by using red, green, and blue pixels, an x-coordinate value and a y-coordinate value of a white point of light, on a CIE chromaticity diagram, which is obtained by mixing light beams of the respective colors each colored by being transmitted through each of red, green, and blue filters twice respectively fall within a range of 0.280 to 0.320 and a range of 0.285 to 0.325. In this case, desirably, the liquid crystal display device comprises a color filter having red, green, and blue filters formed for each of pixels corresponding to the electrodes, the color filter having a spectral characteristic that when white is displayed by using red, green, and blue pixels, an x-coordinate value and a y-coordinate value of a white point of mixed light of light beams of the respective colors each obtained by squaring an integral value of a spectral distribution curve of light transmitted through each of the red, green, and blue filters once respectively fall within a range of 0.280 to 0.320 and a range of 0.285 to 0.325. Desirably, the red, green, and blue filters have spectral characteristics in which an x-coordinate value and a y-coordinate value of a white point of mixed light, on a CIE chromaticity diagram, which is obtained by mixing light beams of the respective colors each colored by being reciprocally transmitted through each of red, green, and blue filters respectively fall within a range of 0.295 to 0.305 and a range of 0.305 to 0.325. Furthermore, desirably, the surface light source comprises a pseudo-white-light-emitting element having a fluorescent layer that emits red fluorescence and green fluorescence and is provided on an irradiation side of a blue light-emitting diode. Preferably, the pseudo-white-light-emitting element emits pseudo-white light having light intensity peaks in wavelength bands of 450 to 470 nm, 520 to 550 nm, and 620 to 650 nm, respectively. More desirably, the pseudo-white-light-emitting element emits pseudo-white light having light intensity peaks at wavelengths of $465 \pm 10$ nm, $535 \pm 10$ nm, and $635 \pm 10$ nm.

A liquid crystal display apparatus according to the present invention comprises a liquid crystal display device comprising a pair of opposing substrates, electrodes that are provided at least one of opposing inner surfaces of the pair of substrates and control transmission of light by changing an aligned state of liquid crystal molecules by voltage application, a color filter comprising red, green, and blue filters formed for each of pixels corresponding to the electrodes and having a spectral characteristic that when white is displayed by using red, green, and blue pixels, an x-coordinate value and a y-coordinate value of a white point of light, on a CIE chromaticity diagram, which is obtained by mixing light beams of the respective colors each colored by being transmitted through each of red, green, and blue filters twice respectively fall within a range of 0.280 to 0.320 and a range of 0.285 to 0.325, a liquid crystal layer sealed between the pair of substrates, and a pair of polarizing plates that are respectively placed on outer surfaces of the pair of substrates, a surface light source that is placed on an opposite side of the liquid crystal display device to an observation side thereof and applies, to the liquid crystal display device, illumination light comprising pseudo-white light having light intensity peaks at wavelengths of $465 \pm 10$ nm, $535 \pm 10$ nm, and $635 \pm 10$ nm, and a reflector that is placed between the liquid crystal display device and the surface light source, comprises a prism array on which prism portions are formed, and reflects incident light from the observation side, which is transmitted through the liquid crystal display device, toward the liquid crystal display device by the prism array.

In the liquid crystal display apparatus, preferably, the reflector comprises a prism array on which prism portions are formed, with each prism portion having an isosceles triangular sectional shape having two sides that have the same inclination angle with respect to a normal direction of the liquid crystal display device and the same length, a vertical angle defined by two sides across the normal direction falling within a range of 80° to 100°, and the vertical angle facing the liquid crystal display device. In this case, desirably, the apparatus further comprises a reflecting/polarizing plate that is placed between the liquid crystal display device and the reflector and has a transmission axis that transmits one of linearly polarized light components perpendicular to each other and a reflection axis that reflects the other linearly polarized light component, with the transmission axis being parallel to a transmission axis of a polarizing plate on an opposite side of the liquid crystal display device to the observation side, and the reflector comprises a first prism array on which linear prism portions are formed parallel to each other, and a second prism array that is placed on a surface side of the first prism array that faces one of the liquid crystal display device and the surface light source, and on which linear prism portions substantially perpendicular to the prism portions of the first prism array are formed parallel to each other.

In addition, a liquid crystal display apparatus according to the present invention comprises a liquid crystal display device comprising a pair of opposing substrates, electrodes that are provided at least one of opposing inner surfaces of the pair of substrates and control transmission of light by changing an aligned state of liquid crystal molecules by voltage application, a color filter comprising red, green, and blue filters formed for each of pixels corresponding to the electrodes and having a spectral characteristic that when white is displayed by using red, green, and blue pixels, an x-coordinate value and a y-coordinate value of a white point of mixed light, on a CIE chromaticity diagram, which is obtained by mixing light beams of the respective colors each colored by being transmitted through each of red, green, and blue filters twice respectively fall within a range of 0.280 to 0.320 and a range of 0.285 to 0.325, a liquid crystal layer sealed between the pair of substrates, and a pair of polarizing plates that are respectively placed on outer surfaces of the pair of substrates, a surface light source that is placed on an opposite side of the liquid crystal display device to an observation side thereof and applies, to the liquid crystal display device, illumination light comprising pseudo-white light having light intensity peaks at wavelengths of 465 ± 10 nm, 535 ± 10 nm, and 635 ± 10 nm, a reflecting/polarizing plate that is placed between the liquid crystal display device and the surface light source and has a transmission axis that transmits one of linearly polarized light components perpendicular to each other and a reflection axis that reflects the other linearly polarized light component, with the transmission axis being parallel to a transmission axis of a polarizing plate on an opposite side of the liquid crystal display device to the observation side, a λ/4 retardation plate that is placed between the reflecting/polarizing plate and the reflector and provides a phase difference of 1/4 wavelength between ordinary light and extraordinary light of transmitted light, and a reflector that comprises a first prism array that is placed between the reflecting/polarizing plate and the surface light source and on which linear prism portions are formed parallel to each other, and a second prism array that is placed on a surface side of the first prism array that faces one of the liquid crystal display device and the surface light source, and on which linear prism portions substantially perpendicular to the prism portions of the first prism array are formed parallel to each other, sets a direction in which the prism portions of at least one of the first and second prism arrays linearly extend to substantially 45° with respect to the transmission axis of the reflecting/polarizing plate, and reflects, toward the liquid crystal display device, incident light from the observation side, which is transmitted through the liquid crystal display device, by the prism array.

In the liquid crystal display apparatus, preferably, the first and second prism arrays of the reflector comprise prism arrays on which a plurality of prism portions are formed, each of the prism portions having an isosceles triangular sectional shape having two sides that have the same inclination angle with respect to a normal direction of the liquid crystal display device and the same length.

**Claims**

1. A reflection/transmission type liquid crystal display apparatus comprising:

   a liquid crystal display device (1) comprising a pair of opposing substrates (2, 3), electrodes (4) that are provided on one of opposing inner surfaces of the pair of substrates (2, 3) and an opposed electrode (6) that is provided on the other of the opposing inner surfaces of the pair of substrates (2, 3) and control transmission of light by changing an aligned state of liquid crystal molecules by voltage application, a liquid crystal layer (11) provided between the pair of substrates (2, 3), and a pair of polarizing plates (12, 13) that are respectively placed on outer surfaces of the pair of substrates (2, 3);
   a surface light source (15) that includes a light guide plate (16) comprising a plate-like member and light-emitting elements (20) arranged to face an end face of the light guide plate (16), and applies illumination light to the liquid crystal display device (1);
   a reflector (27) that is placed between the liquid crystal display device (1) and the surface light source (15) and reflects at least a part of external incident light that is transmitted through the liquid crystal display device (1), toward the liquid crystal display device (1);
   a reflecting and polarizing plate (32) that is placed between the liquid crystal display device (1) and the reflector (27),
   wherein the reflector (27) comprises a first prism array (28) having first prism potions (29) and a second prism array (30) having second prism portions (31), the first prism portions (29) are formed linearly to be parallel to a first direction, and the second prism portions (31) are formed linearly to be parallel to a second direction perpendicular to the first direction,
   at least one of the first and second prism arrays (28, 30) is placed so that an angle defined by a transmission axis of the reflecting and polarizing plate (32) and one of the first and second directions is 45°,
   the first prism portions (29) are arranged on the first prism array (28) so that recesses and projections are formed on a surface facing the reflecting and polarizing plate (32), and the second prism portions (31) are arranged on the second prism array (30) so that recesses and projections are formed on a surface facing the first prism array (28),
   the first prism array (28) is formed so that the first prism portions (29) each have a sectional shape of an isosceles triangular shape, and the second prism array (30) is formed so that the second prism portions (31) each have a sectional shape of an isosceles triangular shape,
   the first prism portions (29) and the second prism portions (31) each have an angle defined by two sides arranged across a normal to the liquid crystal display device (1) that falls within a range of 80° to 100°,

the polarizing plate (13) on the side facing the surface light source has a transmission axis (13a) that is arranged parallel to a transmission axis (32a) of the reflecting and polarizing plate (32) and is arranged at 45° with respect to the first prism portions (29), and

the apparatus further comprising a λ/4 retardation plate that is placed between the reflecting and polarizing plate (32) and the first prism array (28) and provides a phase difference of 1/4 wavelength between ordinary light and extraordinary light of transmitted light, wherein the slow axis of the retardation plate is aligned in the first direction.

**2.** The apparatus according to claim 1, wherein each of the light-emitting elements emit pseudo-white light having light intensity peaks in wavelength bands of 450 to 470 nm, 520 to 550 nm, and 620 to 650 nm, respectively, and the peak intensity in the wavelength band of 450 to 470 nm is set higher than the peak intensity in the wavelength band of 520 to 550 nm and the peak intensity in the wavelength band of 620 to 650 nm and

wherein the light-emitting elements each comprise a pseudo-white-light emitting element including a blue LED and a fluorescent layer to emit red florescence and green florescence provided on the irradiation side of the blue LED.

**3.** The apparatus according to claim 2, wherein a peak half-value width in the wavelength band of 450 to 470 nm is set narrower than a peak half-value width in the wavelength band of 520 to 550 nm and a peak half-value width in the wavelength band of 620 to 650 nm.

## Patentansprüche

**1.** Flüssigkristallanzeigevorrichtung vorm Reflexions-/Durchlasstyp, umfassend:

eine Flüssigkristallanzeigeeinrichtung (1), umfassend ein Paar aus gegenüberliegenden Substraten (2, 3), Elektroden (4), die auf einer von gegenüberliegenden Innenseiten des Paares aus Substraten (2, 3) angeordnet sind, und eine gegenüberliegende Elektrode (6), die auf der anderen der gegenüberliegenden Innenseiten des Paares aus Substraten (2, 3) angeordnet ist, und welche die Lichtdurchlässigkeit durch Ändern eines ausgerichteten Zustands der Flüssigkristallmoleküle durch Anlegen von Spannung steuern, eine Flüssigkristallschicht (11), die zwischen dem Paar aus Substraten (2, 3) angeordnet ist, und ein Paar aus Polarisationsplatten (12, 13), die jeweils auf Außenseiten des Paares aus Substraten (2, 3) platziert sind;

eine Oberflächenlichtquelle (15), die eine Lichtleitplatte (16), umfassend ein plattenförmiges Element und lichtemittierende Elemente (20), die so angeordnet sind, dass sie zu einer Endfläche der Lichtleitplatte (16) ausgerichtet sind, beinhaltet und die ein Beleuchtungslicht auf die Flüssigkristallanzeigeeinrichtung (1) anwendet;

einen Reflektor (27), der zwischen der Flüssigkristallanzeigeeinrichtung (1) und der Oberflächenlichtquelle (15) angeordnet ist und zumindest einen Teil von externem Einfallslicht, das durch die Flüssigkristallanzeigeeinrichtung (1) durchgelassen wird, in Richtung der Flüssigkristallanzeigeeinrichtung (1) reflektiert;

eine Reflexions- und Polarisationsplatte (32), die zwischen der Flüssigkristallanzeigeeinrichtung (1) und dem Reflektor (27) platziert ist,

wobei der Reflektor (720) eine erste Prismaanordnung (28) mit ersten Prismaabschnitten (29) und eine zweite Prismaanordnung (30) mit zweiten Prismaabschnitten (31) umfasst, wobei die ersten Prismaabschnitte (99) linear ausgebildet sind, so dass sie parallel zu einer ersten Richtung verlaufen, und die zweiten Prismaabschnitte (31) linear ausgebildet sind, so dass sie parallel zu einer zweiten Richtung lotrecht zu der ersten Richtung verlaufen,

wobei mindestens eine aus der ersten und zweiten Prismaanordnung (28, 30) so platziert ist, dass ein Winkel, der von einer Durchlässigkeitsachse der Reflexions- und Polarisationsplatte (32) und einer aus der ersten und zweiten Richtung gebildet wird, 45° beträgt,

wobei die ersten Prismaabschnitte (29) auf der ersten Prismaanordnung (28) so angeordnet sind, dass Vertiefungen und Vorsprünge auf einer Oberfläche gebildet werden, die zu der Reflexions- und Polarisationsplatte (32) ausgerichtet ist, und die zweiten Prismaabschnitte (31) auf der zweiten Prismaanordnung (30) so angeordnet sind, dass Vertiefungen und Vorsprünge auf einer Oberfläche gebildet werden, die zu der ersten Prismaanordnung (28) ausgerichtet ist,

wobei die erste Prismaanordnung (28) so ausgebildet ist, dass die ersten Prismaabschnitte (29) jeweils eine Querschnittform eines gleichschenkligen Dreiecks aufweisen, und die zweite Prismaanordnung (30) so ausgebildet ist, dass die zweiten Prismaabschnitte (31) jeweils eine Querschnittsform eines gleichschenkligen Dreiecks aufweisen,

wobei die ersten Prismaabschnitte (29) und die zweiten Prismaabschnitte (31) jeweils einen Winkel aufweisen, der von zwei Seiten definiert wird, die über einer Normalen auf die Flüssigkristallanzeigeeinrichtung (1) angeordnet sind, der in einen Bereich von 80° bis 100° fällt,
wobei die Polarisationsplatte (13) auf der Seite, die zu der Oberflächenlichtquelle ausgerichtet ist, eine Durchlässigkeitsachse (13a) aufweist, die parallel zu einer Durchlässigkeitsachse (32a) der Reflexions- und Polarisationsplatte (32) angeordnet ist und die mit 45° bezüglich den ersten Prismaabschnitten (29) angeordnet ist, und wobei die Vorrichtung des Weiteren eine λ/4-Retardierungsplatte umfasst, die zwischen der Reflexions- und Polarisationsplatte (32) und der ersten Prismaanordnung (28) platziert ist und eine Phasendifferenz von 1/4-Wellenlänge zwischen gewöhnlichem Licht und außergewöhnlichem Licht des durchgelassenen Lichts bereitstellt, wobei die langsame Achse der Retardierungsplatte in der ersten Richtung ausgerichtet ist.

2. Vorrichtung nach Anspruch 1, wobei jedes der lichtemittierenden Elemente pseudoweißes Licht mit Lichtintensitätsspitzen in Wellenlängenbändern von 450 bis 470 nm, 520 bis 550 nm bzw. 620 bis 650 nm emittiert, und die Spitzenintensität in dem Wellenlängenband von 450 bis 470 nm höher als die Spitzenintensität in dem Wellenlängenband von 520 bis 550 nm und die Spitzenintensität in dem Wellenlängenband von 620 bis 650 nm eingestellt wird, und
wobei die lichtemittierenden Elemente jeweils ein pseudoweißes-Licht-emittierendes Element mit einer blauen LED und einer fluoreszierenden Schicht umfassen, um rote Fluoreszenz und grüne Fluoreszenz zu emittieren, die auf der Strahlungsseite der blauen LED bereitgestellt wird.

3. Vorrichtung nach Anspruch 2, wobei eine Spitzenhalbwertsbreite in dem Wellenlängenband von 450 bis 470 nm schmaler als eine Spitzenhalbwertsbreite in dem Wellenlängenband von 520 bis 550 nm und eine Spitzenhalbwertsbreite in dem Wellenlängenband von 620 bis 650 nm eingestellt wird.

## Revendications

1. Appareil d'affichage à cristaux liquides du type à réflexion/transmission comprenant :

un dispositif d'affichage à cristaux liquides (1) comprenant une paire de substrats opposés (2, 3), des électrodes (4) qui sont prévues sur l'une des surfaces internes opposées de la paire de substrats (2, 3) et une électrode opposée (6) qui est prévue sur l'autre des surfaces internes opposées de la paire de substrats (2, 3) et commandent la transmission de lumière en modifiant un état aligné de molécules de cristaux liquides par application de tension, une couche de cristaux liquides (11) prévue entre la paire de substrats (2, 3), et une paire de plaques de polarisation (12, 13) qui sont respectivement placées sur des surfaces externes de la paire de substrats (2, 3) ;
une source de lumière de surface (15) qui comporte une plaque de guidage de lumière (16) comprenant un élément de type plaque et des éléments électroluminescents (20) agencés de manière à faire face à une face d'extrémité de la plaque de guidage de lumière (16), et applique une lumière d'éclairage au dispositif d'affichage à cristaux liquides (1) ;
un réflecteur (27) qui est placé entre le dispositif d'affichage à cristaux liquides (1) et la source de lumière de surface (15) et réfléchit au moins une partie d'une lumière incidente externe qui est transmise à travers le dispositif d'affichage à cristaux liquides (1), vers le dispositif d'affichage à cristaux liquides (1),
une plaque de réflexion et de polarisation (32) qui est placée entre le dispositif d'affichage à cristaux liquides (1) et le réflecteur (27),
dans lequel
le réflecteur (27) comprend un premier réseau de prismes (28) ayant des premières parties de prisme (29) et un deuxième réseau de prismes (30) ayant des deuxièmes parties de prisme (31), les premières parties de prisme (29) sont formées linéairement pour être parallèles à une première direction, et les deuxièmes parties de prisme (31) sont formées linéairement pour être parallèles à une deuxième direction perpendiculaire à la première direction, au moins l'un des premier et deuxième réseaux de prismes (28, 30) est placé de sorte qu'un angle défini par un axe de transmission de la plaque de réflexion et de polarisation (32) et l'une des première et deuxième directions soit égal à 45°,
les premières parties de prisme (29) sont agencées sur le premier réseau de prismes (28) de sorte que des évidements et des saillies soient formés sur une surface faisant face à la plaque de réflexion et de polarisation (32), et les deuxièmes parties de prisme (31) sont agencées sur le deuxième réseau de prismes (30) de sorte que des évidements et des saillies soient formés sur une surface faisant face au premier réseau de prismes (28),
le premier réseau de prismes (28) est formé de sorte que les premières parties de prisme (29) aient chacune une forme de section triangulaire isocèle, et le deuxième réseau de prismes (30) est formé de sorte que les deuxièmes parties de prisme (31) aient chacune une forme de section triangulaire isocèle,
les premières parties de prisme (29) et les deuxième parties de prisme (31) ont chacune un angle défini par deux côtés agencés à travers une normale au dispositif d'affichage à cristaux liquides (1) qui se situe dans une plage allant de 80° à 100°,

la plaque de polarisation (13) sur le côté faisant face à la source de lumière de surface présente un axe de transmission (13a) qui est agencé parallèlement à un axe de transmission (32a) de la plaque de réflexion et de polarisation (32) et est agencé à 45° par rapport aux premières parties de prisme (29), et

l'appareil comprenant en outre une lame à retard λ/4 qui est placée entre la plaque de réflexion et de polarisation (32) et le premier réseau de prismes (28) et fournit un déphasage de 1/4 de longueur d'onde entre une lumière ordinaire et une lumière extraordinaire d'une lumière transmise, où l'axe lent de la lame à retard est aligné dans la première direction.

2. Appareil selon la revendication 1, dans lequel chacun des éléments électroluminescents émet une lumière pseudo-blanche ayant des pics d'intensité lumineuse dans des bandes de longueurs d'onde allant de 450 à 470 nm, de 520 à 550 nm et de 620 à 650 nm, respectivement, et l'intensité de pic dans la bande de longueurs d'onde allant de 450 à 470 nm est réglée de manière à être supérieure à l'intensité de pic dans la bande de longueurs d'onde allant de 520 à 550 nm et à l'intensité de pic dans la bande de longueurs d'onde allant de 620 à 650 nm, et

dans lequel les éléments électroluminescents comprennent chacun élément émetteur de lumière pseudo-blanche comportant une LED bleue et une couche fluorescente pour émettre une fluorescence rouge et une fluorescence verte prévue sur le côté d'irradiation de la LED bleue.

3. Appareil selon la revendication 2, dans lequel une largeur de pic à mi-hauteur dans la bande de longueurs d'onde allant de 450 à 470 nm est réglée de manière à être plus étroite qu'une largeur de pic à mi-hauteur dans la bande de longueurs d'onde allant de 520 à 550 nm et qu'une largeur de pic à mi-hauteur dans la bande de longueurs d'onde allant de 620 à 650 nm.

**FIG.1**

**FIG.2**

**FIG.3**

80°~100°

**FIG.4**

FIG.5

**FIG.6**

**FIG.7**

**FIG.8**

**FIG.9**

**FIG.10**

**FIG.11**

**FIG.12**

**FIG.13**

**EP 2 240 818 B1**

## REFERENCES CITED IN THE DESCRIPTION

### Patent documents cited in the description

- JP 2002107725 A
- JP 2004093715 A
- JP 2003279988 A